# DEMANDE DE BREVET EUROPEEN

(11) **EP 4 768 860 A1**
(43) Date de publication de la demande: **01.07.2026**
(21) Numéro de dépôt: 25219958.3
(22) Date de dépôt: 02.12.2025
(51) Int. Cl.: G01C 21/16, G01C 21/00

(54) **PROCÉDÉ ET DISPOSITIF DE GESTION DE DONNÉES MULTI-CAPTEURS**

(30) Priorité: 24.12.2024 FR 2415205
(71) Demandeur: AMPERE s.a.s., 92100 Boulougne-Billancourt (FR)
(72) Inventeur: JAZI, Nadhmi, 06160 Juan Les Pins (FR); ZALMAI, Nour, 06600 Antibes (FR)
(74) Mandataire: Renault Group

(57) **Abrégé**

L'invention concerne un procédé de gestion de données multi-capteurs dans un système (10). Le procédé comprenant une étape de mémorisation des données (Dij) reçues d'une pluralité de capteurs (Ci) dans au moins une mémoire tampon (Bi), en associant chaque donnée (Dij) à un marqueur temporel (Tj) indiquant l'instant où la donnée (Dij) est acquise par le capteur (Ci). Cette étape de mémorisation est répétée en continu pendant le fonctionnement du système (10). Le procédé comprend des périodes successives d'exécution d'un algorithme de fusion, incluant une étape de détermination du marqueur temporel le plus récent des données (Dij) mémorisées dans l'au moins une mémoire tampon (Bi), pour constituer un ensemble de marqueurs temporels les plus récents ; une étape de définition d'une fenêtre temporelle ; une étape de traitement des données (Dij) antérieures à la fenêtre temporelle, et de définition d'un état interne du système (10) pour la borne inférieure de la fenêtre temporelle ; et une étape de traitement des données (Dij) comprises dans la fenêtre temporelle.

## Description

### Domaine technique

La présente invention concerne un procédé de gestion de données multi-capteurs dans un système, tel qu'un véhicule automobile. L'invention concerne également un dispositif de gestion de données multi-capteurs, configuré pour exécuter ce procédé.

Le domaine de l'invention est celui du traitement des données multi-capteurs. L'invention peut trouver des applications dans les secteurs du transport (notamment automobile, en particulier pour les systèmes d'aide à la conduite qui utilisent des capteurs de données de l'environnement tels que des mesures faites par des caméras, radars, lidar, etc), de l'industrie, etc.

### Art antérieur

Dans la problématique de fusion de données multi-capteurs, chaque capteur envoie son information de manière périodique ou évènementielle à un système de fusion des données. Les informations arrivent au système de fusion avec un retard qui peut se décomposer en un temps de prise de l'information, un temps de traitement de l'information et un temps de transmission/réception de l'information.

La fusion des données de plusieurs capteurs correspond à l'utilisation conjointe des données des capteurs pour réaliser une tâche quelconque au sein d'un système. Par exemple, dans le cas de capteurs équipant un véhicule automobile, la fusion peut consister à utiliser les informations de ces capteurs pour réaliser une modélisation de l'environnement du véhicule (détection d'obstacles, etc...).

Pour fusionner les informations de plusieurs capteurs, il faut prendre en compte l'aspect temporel de tous les capteurs. Ceci est crucial notamment pour les applications critiques telles que les ADAS (systèmes d'aides à la conduite). En effet, en un temps de 50 ms (temps de cycle typique d'un capteur, e.g. caméra ou radar), un véhicule roulant à 130 km/h parcourt près de 1,8 m. Si on néglige l'aspect temporel, on accumule des erreurs d'estimations grossières (en position et dynamique), qui réduisent la fiabilité du système pour des applications ADAS (tels que l'AEB - automatic emergency braking, l'ACC - adaptive cruise control, l'AES - automatic emergency steering, etc).

En particulier, lorsque le système de fusion traite les informations les plus récentes à sa disposition, des informations plus anciennes peuvent être toujours en cours d'acheminement. Le traitement de fusion se fait donc sans ces données, et les informations utilisées par la fusion sont supprimées. Lors du traitement de fusion suivant, les données qui étaient en cours d'acheminement sont disponibles, mais sont antérieures au dernier traitement de fusion, et sont donc ignorées. Ainsi, toutes les informations à disposition ne sont pas traitées.

Une solution évidente à ce problème consiste à retarder les traitements de fusion de sorte d'une durée suffisante pour garantir l'acheminement des informations. Cependant, cette solution n'est pas satisfaisante car elle retarde la prise de décision des algorithmes exploitant les résultats de la fusion.

Des technologies de gestion de données multi-capteurs sont déjà connues, par exemple des documents US10341746, CN115577320 ou CN107659367.

US10341746 décrit un dispositif configuré pour recevoir les données de multiples capteurs, et organiser les données en trames enregistrées dans des mémoires tampons et associées à des périodes temporelles. Chaque trame de données comprend un en-tête qui identifie tous les capteurs dont les données sont incluses dans la trame et une zone de données des capteurs.

CN115577320 décrit un procédé et un dispositif de fusion de données asynchrone multi-capteurs basé sur l'interpolation de données. Le dispositif comprend un module de calcul à l'estime, un module de tampon de données, un module d'index temporel et un module d'interpolation de données. Le module de calcul à l'estime estime la position et la posture selon le modèle de mouvement du véhicule et les introduit dans un estimateur d'état en tant qu'estimation a priori. Le module de tampon de données est chargé de recevoir les informations de mesure de chaque capteur du véhicule à l'instant présent et les stocker dans un conteneur de tampon de données correspondant, par ordre chronologique. Le module d'index temporel parcourt les données de capteur dans le conteneur de tampon de données en fonction du temps de référence et effectue un verrouillage de position. Le module d'interpolation de données réalise une interpolation de données de capteur en utilisant des données de trame avant et après la position verrouillée, puis introduit les données interpolées dans l'estimateur d'état en tant qu'informations d'observation, pour réaliser une estimation a posteriori de la position du véhicule.

CN107659367 décrit un procédé de synchronisation temporelle d'unités multi-capteurs, comprenant la collecte de données brutes à partir de plusieurs unités de capteurs ; le stockage temporaire des données brutes et des informations temporelles GPS extraites des données brutes dans une zone de stockage spécifique ; la lecture de la valeur temporelle originelle d'un module d'horloge ; et l'étalonnage de paramètres temporels en fonction de la valeur temporelle originelle et des informations temporelles GPS. Après l'étalonnage, selon la valeur temporelle du module d'horloge, les données initiales sont marquées avec une marque temporelle pour obtenir des données mises à jour de plusieurs unités de capteurs. Après le marquage des données, la marque temporelle est mise à jour en fonction de la fréquence d'étalonnage du module d'horloge.

Cependant, ces solutions ne sont pas entièrement satisfaisantes. Certes, elles mentionnent la bufferisation (mémorisation dans une mémoire tampon) et l'application de marqueurs temporels aux données des capteurs. En revanche, elles ne présentent pas un mécanisme de synchronisation et une logique de bufferisation adaptés à une problématique de fusion de données.

### Exposé de l'invention

Le but de la présente invention est de proposer un procédé et un dispositif de gestion multi-capteurs améliorés, remédiant aux inconvénients mentionnés ci-dessus.

A cet effet, l'invention a pour objet un procédé de gestion de données multi-capteurs dans un système, le procédé comprenant une étape de mémorisation des données reçues d'une pluralité de capteurs dans au moins une mémoire tampon, en associant chaque donnée à un marqueur temporel indiquant l'instant où la donnée est acquise par le capteur ; cette étape de mémorisation étant répétée en continu pendant le fonctionnement du système ; le procédé étant caractérisé en ce qu'il comprend au moins une première période d'exécution d'un algorithme de fusion à un instant, incluant les étapes suivantes :
- une étape de détermination du marqueur temporel le plus récent des données mémorisées dans l'au moins une mémoire tampon, de manière à constituer un ensemble de marqueurs temporels les plus récents ;
- une étape de définition d'une fenêtre temporelle, incluant une borne inférieure définie par le marqueur temporel le plus ancien parmi l'ensemble des marqueurs temporels les plus récents et une borne supérieure définie par le marqueur temporel le plus récent parmi l'ensemble des marqueurs temporels les plus récents ;
- une étape de traitement, par l'algorithme de fusion, des données des capteurs mémorisées dans l'au moins une mémoire tampon antérieures à la fenêtre temporelle, et de définition d'un état interne du système pour la borne inférieure ; suivie par une opération de stockage de l'état interne du système défini pour la borne inférieure et une opération de suppression des données de l'au moins une mémoire tampon antérieures à la fenêtre temporelle ; et
- une étape de traitement, par l'algorithme de fusion, des données de l'au moins une mémoire tampon comprises dans la fenêtre temporelle de la période d'exécution.

Ainsi, l'invention permet d'obtenir un compromis entre temps d'exécution, mémorisation des données et perte de données. L'invention permet l'exploitation et la réutilisation des mesures capteurs récentes, ainsi que la cohérence avec une estimation antérieure.

En prenant en compte l'aspect temporel dans la fusion de données multi-capteurs, l'invention propose une stratégie intelligente de bufferisation des données capteurs, afin de bénéficier du maximum d'information et de satisfaire les contraintes mémoires et d'exécution pour un algorithme de fusion de données. Cette stratégie de bufferisation présente plusieurs avantages :
- minimiser la taille de la mémoire tampon de chaque capteur ;
- utiliser les informations de chaque capteur sans devoir rejeter une information due à un capteur trop lent ;
- utiliser toutes les informations capteurs reçus à un temps d'exécution ;
- minimiser les efforts de calcul entre un temps d'exécution d'un algorithme de fusion de données et le temps d'exécution suivant.

La stratégie de bufferisation proposée peut être mis en œuvre grâce au mécanisme de synchronisation temporelle entre les capteurs. En outre, cette stratégie ne dépend pas des moyens de communication des données et s'adapte à la latence de chaque capteur.

L'invention présente divers modes de réalisation avantageux, pouvant être pris isolément ou en combinaison.

Le procédé comprend plusieurs périodes d'exécution successives de l'algorithme de fusion.

En particulier, le procédé comprend au moins une deuxième période d'exécution de l'algorithme de fusion à un instant faisant suite à la première période d'exécution et incluant les étapes suivantes :
- une étape de détermination du marqueur temporel le plus récent des données mémorisées dans l'au moins une mémoire tampon, de manière à constituer un ensemble de marqueurs temporels les plus récents de la deuxième période d'exécution ;
- une étape de définition d'une deuxième fenêtre temporelle, incluant une borne inférieure définie par le marqueur temporel le plus ancien parmi l'ensemble des marqueurs temporels les plus récents et une borne supérieure définie par le marqueur temporel le plus récent parmi l'ensemble des marqueurs temporels les plus récents de la deuxième période d'exécution ;
- une étape de traitement, par l'algorithme de fusion, des données de l'au moins une mémoire tampon antérieures à la deuxième fenêtre temporelle en repartant de l'état interne du système défini pour la borne inférieure de la première période d'exécution, et de définition d'un état interne du système pour la borne inférieure de la deuxième période d'exécution ; suivie par une opération de stockage de l'état interne du système défini pour la borne inférieure de la deuxième période d'exécution et une opération de suppression des données de l'au moins une mémoire tampon antérieures à la deuxième fenêtre temporelle ; et
- une étape de traitement, par l'algorithme de fusion, des données de l'au moins une mémoire tampon comprises dans la deuxième fenêtre temporelle.

Selon un mode de réalisation avantageux, la deuxième période d'exécution inclut une étape supplémentaire d'association entre les données de fusion calculées à l'étape de traitement de la fenêtre temporelle de la première période d'exécution et les données de fusion calculées lors des étapes de traitement de la deuxième période d'exécution.

L'algorithme de fusion est configuré pour déterminer si un ou plusieurs capteurs fournissent plus fréquemment et/ou plus rapidement des données que d'autres capteurs, de sorte qu'une différence de débit de données soit traitée avec des fonctions de pondération ou du sous-échantillonnage.

De préférence, l'algorithme de fusion utilise un filtre de Kalman ou l'une de ses variantes.

Également de préférence, l'état interne mémorisé comprend la moyenne et la covariance de l'ensemble des attributs des objets d'une scène.

Selon un mode de réalisation particulier, dans l'étape de traitement, par l'algorithme de fusion, des données de l'au moins une mémoire tampon comprises dans la fenêtre temporelle, l'algorithme de fusion considère toutes les données comprises dans la fenêtre temporelle.

En alternative, dans l'étape de traitement, par l'algorithme de fusion, des données de l'au moins une mémoire tampon comprises dans la fenêtre temporelle, l'algorithme de fusion considère seulement une partie des données comprises dans la fenêtre temporelle.

Selon un mode de réalisation particulier, plusieurs capteurs ont un même format de mesure, une seule et même mémoire tampon étant utilisée pour tous ces capteurs ayant le même format de mesure, au lieu d'instancier une mémoire tampon par capteur.

Selon un mode de réalisation avantageux, lorsqu'un ou plusieurs capteurs respectent un temps d'exclusion entre deux mesures consécutives, alors dans l'étape de détermination, ce temps d'exclusion est ajouté au marqueur temporel le plus récent dans la mémoire tampon lors de la détermination de l'ensemble de marqueurs temporels les plus récents utilisés pour établir la borne inférieure dans l'étape de définition de la fenêtre temporelle.

Selon un mode de réalisation particulier, le traitement des données correspond à l'analyse des données des capteurs acquises à un instant donné pour en déduire des informations sur l'environnement du système.

L'invention a également pour objet un dispositif de gestion de données multi-capteurs, caractérisé en ce qu'il est configuré pour exécuter le procédé décrit ci-dessus. Le dispositif comprend : une pluralité de capteurs configurés pour effectuer des mesures de données ; une horloge globale partagée entre tous les capteurs, chaque capteur étant capable de tamponner une donnée avec un marqueur temporel sur l'horloge globale ; et un calculateur configuré pour exécuter l'algorithme de fusion de données sur un support informatique.

### Description des figures

L'invention sera mieux comprise à la lecture de la description qui va suivre, donnée uniquement à titre d'exemple non limitatif et faite en référence aux dessins annexés sur lesquels :
- la figure 1 est une représentation schématique du procédé de gestion multi-capteurs conforme à l'invention.
- la figure 2 est une représentation schématique de l'étape de mémorisation des données incluse dans le procédé selon l'invention.
- la figure 3 est un graphique représentant une première période d'exécution d'un algorithme de fusion de données utilisé dans l'invention.
- la figure 4 est un graphique représentant une deuxième période d'exécution de l'algorithme de fusion de données, faisant suite à la première période.

### Description détaillée de l'invention

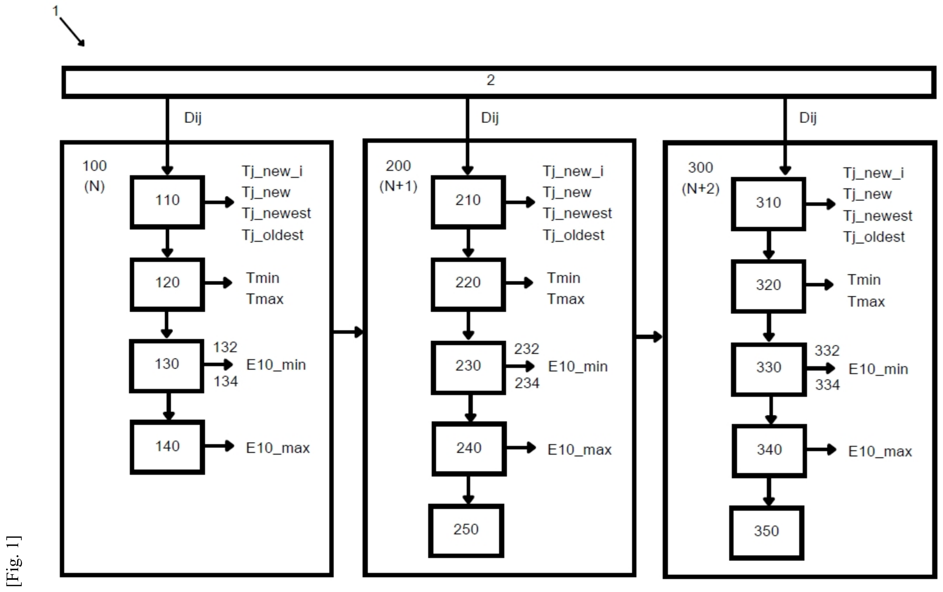

Les figures 1 à 4 illustrent un procédé (1) de gestion de données multi-capteurs dans un système (10), par exemple du type véhicule automobile. Le procédé (1) comprend une étape de mémorisation (2) de données (Dij), répétée en continue pendant le fonctionnement du système (10). Le procédé (1) comprend également des périodes (100 (110, 120, 130, 140), 200 (210, 220, 230, 240, 250), 300 (310, 320, 330, 340, 350) ; N, N+1, N+2) successives d'exécution d'un algorithme de fusion des données (Dij), comme détaillé ci-après.

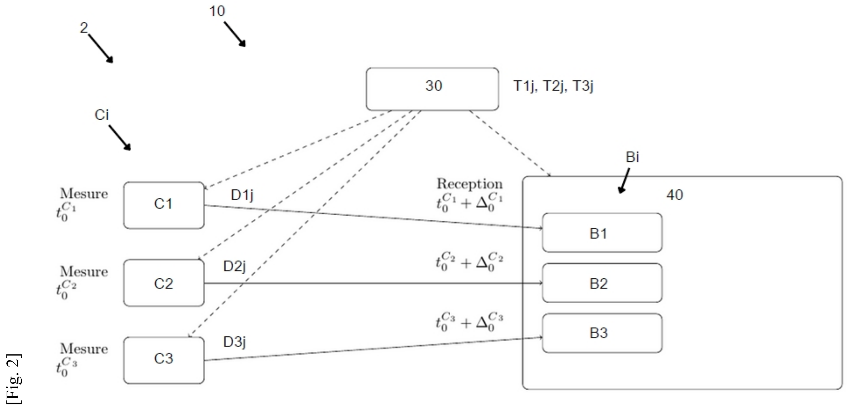

La figure 2 montre le dispositif (20) de gestion de données multi-capteurs, configuré pour exécuter le procédé (1). Le dispositif (20) comprend une pluralité de capteurs (Ci), ici trois capteurs (C1, C2, C3), par exemple une caméra, un radar et un lidar, configurés pour effectuer des mesures de données (Dij), et pour les transmettre à un calculateur (40), également appelé bloc de fusion, qui les enregistre dans une ou plusieurs mémoires tampons (Bi), également appelées buffer. Le dispositif (20) comprend une horloge globale (30) partagée entre tous les capteurs (Ci). Chaque capteur (Ci) est capable de tamponner les données (Dij) qu'il transmet avec un marqueur temporel (Tj) correspondant à l'heure où la donnée a été acquise. Le calculateur (40) est configuré pour exécuter l'algorithme de fusion de données, à partir des données (Dij) enregistrées dans le ou les mémoires tampons (Bi).

La figure 2 permet également d'illustrer l'étape de mémorisation (2), avec les trois capteurs (C1, C2, C3). L'étape (2) consiste à mémoriser les données (D1j, D2j, D3j) reçues des capteurs (C1, C2, C3) dans les mémoires tampons (B1, B2, B3) correspondants, en associant chaque donnée (D1j, D2j, D3j) à un marqueur temporel (T1j, T2j, T3j) indiquant l'instant où la donnée (D1j, D2j, D3j) est acquise par le capteur (C1, C2, D3).

La mesure effectuée par un capteur (Ci) à un instant donné t0 est reçue par le calculateur (40) et l'algorithme de fusion de données l'instant t0 + Δ0, où Δ0 englobe le temps de traitement de l'information par le capteur (Ci), le temps de transmission de l'information et le temps de réception de l'information par le calculateur (40) qui exécute l'algorithme de fusion. On suppose que l'information suivante mesurée par ce même capteur à t1 > t0 sera reçu nécessairement à un temps (t1 + Δ1) > (t0 + Δ0).

Lorsque l'algorithme de fusion de données (Dij) est appelé, l'ensemble des informations de tous les capteurs (Ci) enregistrées dans les mémoires tampons (Bi) sont lues et traitées par l'algorithme.

Dans certains cas, tous les capteurs (Ci) ont des formats de mesure différents (par exemple des coordonnées 2D ou 3D, une vitesse, etc...). Ainsi, des mémoires tampons (Bi) différentes doivent être utilisées pour les différents capteurs (Ci), avec une mémoire tampon par capteur, comme sur l'exemple des figures 2 à 4.

Dans d'autres cas, plusieurs capteurs (Ci) peuvent avoir un même format de mesure. Ainsi, une seule et même mémoire tampon (Bi) peut être utilisée pour tous ces capteurs (Ci) ayant le même format de mesure, au lieu d'instancier un buffer par capteur.

L'étape de mémorisation (2) est répétée en continu pendant le fonctionnement du système (10), de manière à mémoriser en continu les données (Dij) issues des mesures des capteurs (Ci) dans le ou les mémoires tampons (Bi).

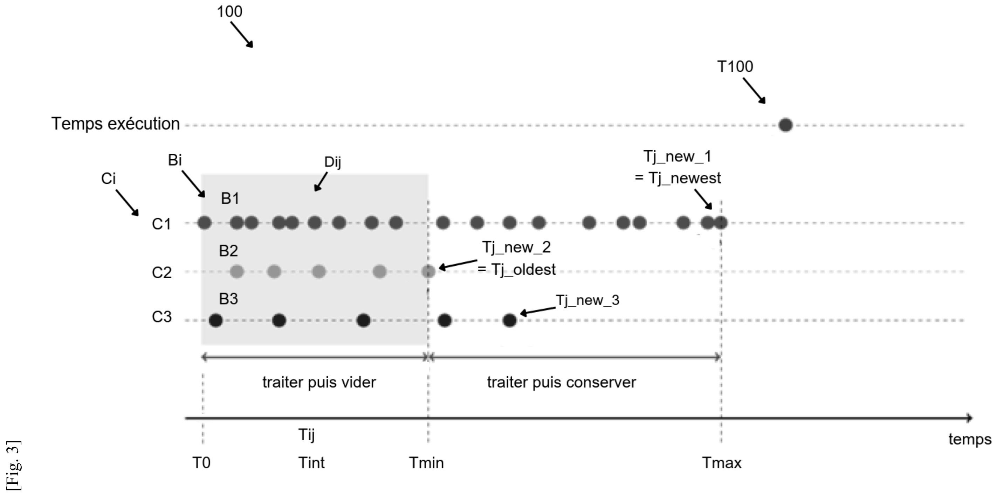

Comme montré aux figures 1 et 3, le procédé (1) comprend une première période d'exécution (100) de l'algorithme de fusion à un instant (T100), incluant plusieurs étapes (110, 120, 130, 140).

La période (100) comprend tout d'abord une étape de détermination (110) du marqueur temporel le plus récent (Tj_new_i) des données de chaque capteur dans la ou les mémoires tampons (Bi), de manière à constituer un ensemble de marqueurs temporels les plus récents (Tj_new) pour l'ensemble des capteurs (Ci). On définit le marqueur temporel le plus ancien (Tj_oldest) parmi l'ensemble des marqueurs temporels les plus récents (Tj_new) et le marqueur temporel le plus récent (Tj_newest) parmi l'ensemble des marqueurs temporels les plus récents (Tj_new).

La période (100) comprend ensuite une étape de définition (120) d'une fenêtre temporelle (Tmin ; Tmax), incluant une borne inférieure (Tmin) définie par le marqueur temporel le plus ancien (Tj_oldest) parmi l'ensemble des marqueurs temporels les plus récents (Tj_new) et une borne supérieure (Tmax) définie par le marqueur temporel le plus récent (Tj_newest) parmi l'ensemble des marqueurs temporels les plus récents (Tj_new).

Pour chaque période (N) d'exécution de l'algorithme de fusion, on décompose le traitement de l'information de la ou des mémoires tampons (Bi) en deux parties, avant la fenêtre temporelle et à l'intérieur de la fenêtre temporelle (Tmin ; Tmax) définie pour cette période (N).

Après l'étape (120), la période (100) comprend une étape de traitement (130), par l'algorithme de fusion, des données (Dij) des mémoires tampons (Bi) antérieures à la fenêtre temporelle (Tmin ; Tmax), et de définition d'un état interne (E10_min) du système (10) pour la borne inférieure (Tmin). Ainsi, l'algorithme de fusion peut traiter séquentiellement toutes les données (Dij) enregistrées dans les mémoires tampons (Bi), qui ont un marqueur temporel (Tj) inférieur ou égal à la borne inférieure (Tmin), par ordre chronologique.

L'étape (120) est suivie par une opération de stockage (132) de l'état interne (E10_min) du système (10) défini pour la borne inférieure (Tmin), qui sera ré-utilisé à la prochaine période d'exécution de l'algorithme de fusion, et une opération de suppression (134) des données (Dij) des mémoires tampons (Bi) antérieures à la fenêtre temporelle (Tmin ; Tmax), ce qui permet de nettoyer les mémoires tampons (Bi). Avec cette logique, aucune mesure des capteur (Ci) en cours d'acheminement vers le calculateur (40) ne sera rejetée, car pour chaque capteur (Ci), la prochaine mesure sera nécessairement à un temps supérieur au marqueur temporel le plus récent (Tj_new_i), qui est lui-même supérieur ou égal à la borne inférieure (Tmin).

En pratique, on suppose que l'algorithme de fusion de données (Dij) comprend l'estimation temporelle d'un état interne (E10_min) qui regroupe l'ensemble des informations à estimer (e.g. une description de l'environnement d'un véhicule automobile grâce à un ensemble d'objets, chaque objet ayant une position, une dynamique, une classe, etc). Cet état interne (E10_min), associé à un temps T, peut être mis à jour grâce à une mesure de capteur (Ci) plus récente que le temps T d'estimation, mais ne peut pas bénéficier d'une mesure plus ancienne (auquel cas la mesure serait simplement rejetée).

Selon un autre mode de réalisation avantageux, l'algorithme de fusion peut utiliser un filtre de Kalman ou l'une de ses variantes (filtre étendu, filtre à particule, etc). De préférence, l'état interne (E10_min) mémorisé comprend la moyenne et la covariance de l'ensemble des attributs (position, vitesse, accélération) des objets d'une scène.

La période (100) comprend aussi une étape de traitement (140), par l'algorithme de fusion, des données (Dij) des mémoires tampons (Bi) comprises dans la fenêtre temporelle (Tmin ; Tmax), pour tenir compte des informations des capteurs les plus récentes.

Ainsi, en partant de l'état interne (E10_min) estimé du système (10) pour la borne inférieure (Tmin), on peut ensuite traiter et fusionner toutes les informations présentes dans les mémoires tampons (Bi) afin d'estimer l'état du système (10) à la borne supérieure (Tmax). Ce second traitement n'est valide que pour la période d'exécution (N) et sera ensuite ré-estimé à la période d'exécution suivante (N+1), avec potentiellement des mesures capteurs qui seraient arrivées seulement au prochain temps d'exécution.

Selon un mode de réalisation avantageux, l'algorithme de fusion peut être configuré pour déterminer si un ou plusieurs capteurs (Ci) fournissent plus fréquemment et/ou plus rapidement des données que d'autres capteurs (Ci). Ainsi, une différence de débit de données (Dij) peut être traitée avec des fonctions de pondération ou du sous-échantillonnage.

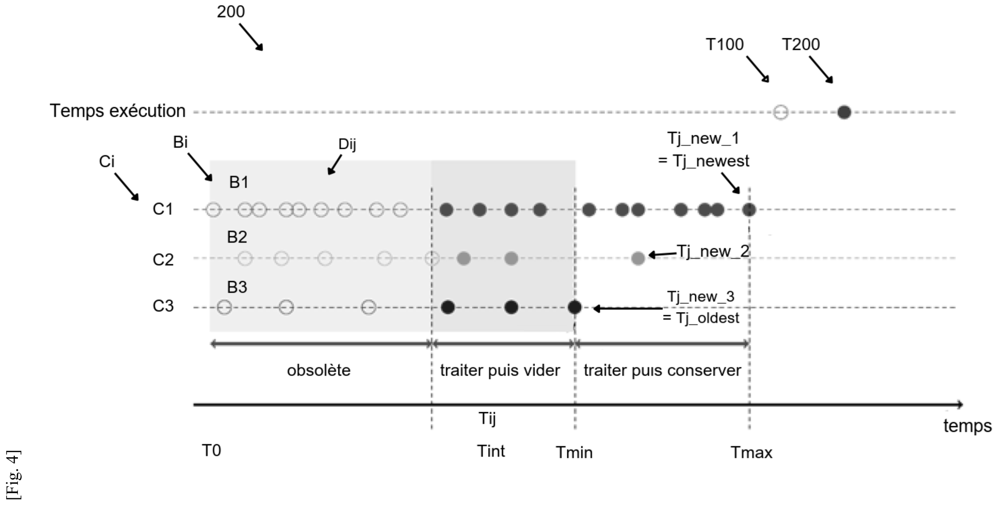

Comme montré aux figures 1 et 4, le procédé (1) comprend une deuxième période d'exécution (200) de l'algorithme de fusion à un instant (T200), faisant suite à la première période d'exécution (100). La période (200) incluant plusieurs étapes (210, 220, 230, 240, 250) comparables aux étapes (110, 120, 130, 140, 150), avec néanmoins certaines différences détaillées ci-après.

La deuxième période (200) comprend une étape de détermination (210) du marqueur temporel le plus récent (Tj_new_i) des données (Dij) mémorisées dans la ou les mémoires tampons (Bi), de manière à constituer un ensemble de marqueurs temporels les plus récents (Tj_new) pour l'ensemble des capteurs (Ci).

La deuxième période (200) comprend ensuite une étape de définition (220) d'une deuxième fenêtre temporelle (Tmin ; Tmax), différente de la première fenêtre temporelle (Tmin ; Tmax) de la première période (100). La deuxième fenêtre temporelle (Tmin ; Tmax) inclut une borne inférieure (Tmin) définie par le marqueur temporel le plus ancien (Tj_oldest) parmi l'ensemble des marqueurs temporels (Tj) les plus récents (Tj_new) et une borne supérieure (Tmax) définie par le marqueur temporel le plus récent (Tj_newest) parmi l'ensemble des marqueurs temporels les plus récents (Tj_new) de la période (200). La deuxième fenêtre temporelle (Tmin ; Tmax) est, par définition, différente de la première fenêtre temporelle (Tmin ; Tmax) dès lors que de nouvelles mesures sont mémorisées dans la mémoire tampon.

Après l'étape (220), la période (200) comprend une étape de traitement (230), par l'algorithme de fusion, des données (Dij) des mémoires tampons (Bi) antérieures à la deuxième fenêtre temporelle (Tmin ; Tmax), en repartant de l'état interne (E10_min) du système (10) défini pour la borne inférieure (Tmin) de la période (100), et de définition d'un état interne (E10_min) du système (10) pour la borne inférieure (Tmin) de la deuxième période (200). Cette étape de traitement (230) est suivie par une opération de stockage (232) de l'état interne (E10_min) du système (10) défini pour la borne inférieure (Tmin) de la période (200) et une opération de suppression (234) des données (Dij) des mémoires tampons (Bi) antérieures à la deuxième fenêtre temporelle (Tmin ; Tmax).

La deuxième période (200) comprend aussi une étape de traitement (240), par l'algorithme de fusion, des données (Dij) de l'au moins une mémoire tampon (Bi) comprises dans la deuxième fenêtre temporelle (Tmin ; Tmax), pour définir un état interne (E10_max) du système (10) pour la borne supérieure (Tmax) de la période (200).

Avantageusement, la deuxième période (200) peut inclure une étape supplémentaire (250) d'association entre les données (Dij) de fusion calculées à l'étape de traitement (140) de la fenêtre temporelle (Tmin ; Tmax) des périodes (100) antérieures et les données (Dij) de fusion calculées lors des étapes de traitement (230, 240) de la période (200). Cette étape (250) vise à éviter les doublons de détection.

Afin de garantir la cohérence et la stabilité de l'estimation de l'état interne (E10_min) entre deux instants d'exécution (T100 ; T200) consécutifs, il est nécessaire de pouvoir trouver une correspondance entre l'estimation de l'état (E10_max) à la borne supérieure (Tmax) faite pour l'instant (T100) et les estimations successives faites à l'instant (T200) qui repasserons nécessairement par la borne supérieure (Tmax) de l'instant (T100). Pour cela, on peut utiliser une fonction d'association pour trouver la correspondance. Si jamais la correspondance d'un sous-état n'est pas trouvée, il faudra alors instancier un nouveau sous-état.

Par exemple, lorsque l'état du système correspond à l'ensemble des objets (véhicules, piétons, vélos, ...) dans une scène avec leurs propriétés, si un nouvel objet apparait entre Tmin et Tmax à une période d'exécution donnée, il faut pouvoir inférer que cet objet (qui sera détruit puis reconstruit à la période d'exécution suivante) reste le même. Ceci pour être fait grâce à une fonction d'association (e.g. calcul d'une distante spatio-dynamique entre nouveaux objets crées). Si jamais l'association ne trouve pas de solution, il faudra alors créer un tout nouvel objet.

En pratique, le procédé (1) comprend plusieurs périodes (N ; N+1 ; N+2) successives d'exécution de l'algorithme de fusion des données (Dij), au cours du fonctionnement du système (10). A chaque période (N+1), le traitement par l'algorithme de fusion repart de l'état interne (E10_min) calculé et mémorisé à la période (N) précédente.

Soit Δi, le délai maximum entre la mesure d'un capteur (Ci) et son instant de réception par l'algorithme de fusion. Avec cette logique, la taille de chaque mémoire tampon (Bi) dépend directement du nombre de mesures maximum du capteur (Ci) associé pendant le délai maximum Δmax (maximum des Δi).

Selon un mode de réalisation particulier, dans l'étape de traitement (140 ; 240) des données (Dij) comprises dans la fenêtre temporelle (Tmin ; Tmax), l'algorithme de fusion considère toutes les données (Dij) comprises dans la fenêtre temporelle (Tmin ; Tmax). Autrement dit, l'algorithme utilise l'ensemble des mesures effectuées dans la fenêtre temporelle (Tmin ; Tmax). Le temps d'attente ΔA avant la période d'exécution suivante est choisi égal à Δmax entre Tmax et Tmin.

En variante, dans l'étape de traitement (140 ; 240) des données (Dij) comprises dans la fenêtre temporelle (Tmin ; Tmax), l'algorithme de fusion peut être configuré pour considérer seulement une partie des données (Dij) comprises dans la fenêtre temporelle (Tmin ; Tmax). Autrement dit, l'algorithme de fusion utilise un sous-ensemble des mesures effectuées dans la fenêtre temporelle (Tmin ; Tmax). Le temps d'attente ΔA avant la période d'exécution suivante est choisi inférieur à Δmax entre Tmax et Tmin. Cette solution a l'avantage de réduire la taille des mémoires tampons (Bi) et diminuer les efforts de calcul, mais l'inconvénient que certaines mesures capteurs seront rejetées. Eventuellement, le taux de rejet par capteur peut être calculé.

Le procédé permet de dimensionner au mieux la taille de la mémoire tampon (Bi) pour chaque capteur (Ci), puisque le nombre de données (Dij) maximum mémorisées dépend du nombre de mesures réalisées par le capteur (Ci) sur l'intervalle Δmax.

La solution proposée est facile à mettre en place et s'adapte automatiquement à n'importe quelle configuration de capteur (Ci), que ce soit leur nombre ou la méthode de communication (périodique ou événementiel), du moment que les mesures sont horodatées. Elle permet d'utiliser toutes les mesures de capteurs à un temps donné, sans devoir rejeter des mesures des capteurs plus lents.

Selon un mode de réalisation particulier, le dispositif (20) comprend plusieurs capteurs (Ci) respectant un temps d'exclusion (Tex) entre deux mesures consécutives. Dans l'étape de détermination (110 ; 210), ce temps d'exclusion (Tex) peut être ajouté au marqueur temporel le plus récent (Tj_new_i) dans la mémoire tampon (Bi) lors de la détermination de l'ensemble de marqueurs temporels les plus récents (Tj_new), qui sont ensuite utilisés pour établir la borne inférieure (Tmin) dans l'étape de définition (120 ; 220) de la fenêtre temporelle (Tmin ; Tmax). Cela permet le traitement des données jusqu'au dernier temps de mesure de la mémoire tampon (Bi) standard incrémenté par le temps d'exclusion (Tex) associé.

Les figures 3 et 4 illustrent un exemple de réalisation du procédé (1) selon l'invention, respectivement la période (100) sur la figure 3 et la période (200) sur la figure 4, avec trois capteurs (C1, C2, C3).

Sur la figure 3 montrant la première période (100), les données (Dij) sont émises par les trois capteurs (C1, C2, C3) avec des rythmes différents et mémorisées dans des mémoires tampons (B1, B2, B3). Le temps en abscisse va du temps initial T0 au temps d'exécution du procédé T100. La borne inférieure Tmin correspond à un temps Tj_new_2 = Tj_oldest d'une donnée de mesure du capteur (C2), qui correspond au marqueur temporel le plus ancien parmi l'ensemble des marqueurs temporels les plus récents (Tj_new_1, Tj_new_2 et Tj_new_3) reçus des trois capteurs. La borne supérieure Tmax correspond à un temps Tj_new_1 = Tj_newest d'une donnée de mesure du capteur (C1), qui est le marqueur temporel le plus récent parmi l'ensemble des marqueurs temporels les plus récents (Tj_new_1, Tj_new_2 et Tj_new_3). Au temps T100, on traite chronologiquement les données (Dij) de l'intervalle Tint antérieures à la borne inférieure Tmin, on mémorise l'état interne (E10_min) à l'instant Tmin, puis on traite les données dans la fenêtre temporelle (Tmin ; Tmax) pour déterminer un état du système (10) à partir de l'ensemble des données dont on dispose. Les données de l'intervalle Tint sont alors supprimées, diminuant ainsi la taille des données stockées dans les mémoires tampons.

Sur la figure 4 montrant la deuxième période (200) qui suit la première période (100) et qui correspond à un deuxième temps d'exécution T200, on observe que de nouvelles données sont disponibles. Les données en ronds vides sont les données obsolètes qui ont été supprimées lors de l'étape précédente. On repart alors de l'état interne (E10min), qui correspond à l'état du système au début du nouvel intervalle Tint. Le temps en abscisse va du temps initial T0 au temps d'exécution T200. Cette fois, la borne inférieure Tmin correspond à un temps Tj_new_3 = Tj_oldest d'une donnée de mesure du capteur (C3), tandis que la borne supérieure Tmax correspond à un temps Tj_new_1 = Tj_newest d'une donnée de mesure du capteur (C1). Au temps T200, on traite les données (Dij) dans l'intervalle Tint chronologiquement jusqu'à la borne inférieure Tmin, on stocke l'état interne, et on traite les données de l'intervalle Tmin - Tmax pour déterminer l'état le plus récent du système. Les données de l'intervalle Tint peuvent alors être supprimées.

Ainsi, la mise en œuvre du procédé (1) permet de :
- Traiter toutes les données (Dij), même les plus récentes,
- Minimiser la quantité de données (Dij) stockées dans les mémoires tampons (Bi),
- Calculer un état du système à partir de l'ensemble des données disponibles,
- Tenir compte, dans l'état du système (10), de données antérieures à Tmax qui n'étaient pas disponibles au temps d'exécution (T100) et sont devenues disponibles au temps d'exécution (T200).

Par ailleurs, le procédé (1), le système (10) et le dispositif (20) peuvent être configurés différemment des figures 1 à 4 sans sortir du cadre de l'invention, qui est défini par les revendications. En outre, les caractéristiques techniques des différents modes de réalisation et variantes mentionnés ci-dessus peuvent être, en totalité ou pour certaines d'entre elles, combinées entre elles. Ainsi, le procédé (1), le système (10) et le dispositif (20) peuvent être adaptés en termes de coût, de fonctionnalités et de performance.

## Revendications

1. Procédé (1) de gestion de données multi-capteurs dans un système (10), le procédé (1) comprenant une étape de mémorisation (2) des données (Dij) reçues d'une pluralité de capteurs (Ci) dans au moins une mémoire tampon (Bi), en associant chaque donnée (Dij) à un marqueur temporel (Tj) indiquant l'instant où la donnée (Dij) est acquise par le capteur (Ci) ; cette étape de mémorisation (2) étant répétée en continu pendant le fonctionnement du système (10) ;
le procédé (1) étant **caractérisé en ce qu'**il comprend au moins une première période d'exécution (100) d'un algorithme de fusion à un instant (T100), incluant les étapes suivantes :
- une étape de détermination (110) du marqueur temporel le plus récent (Tj_new_i) des données (Dij) mémorisées dans l'au moins une mémoire tampon (Bi), de manière à constituer un ensemble de marqueurs temporels les plus récents (Tj_new) ;
- une étape de définition (120) d'une fenêtre temporelle (Tmin ; Tmax), incluant une borne inférieure (Tmin) définie par le marqueur temporel le plus ancien (Tj_oldest) parmi l'ensemble des marqueurs temporels les plus récents (Tj_new) et une borne supérieure (Tmax) définie par le marqueur temporel le plus récent (Tj_newest) parmi l'ensemble des marqueurs temporels les plus récents (Tj_new) ;
- une étape de traitement (130), par l'algorithme de fusion, des données (Dij) des capteurs (Ci) mémorisées dans l'au moins une mémoire tampon (Bi) antérieures à la fenêtre temporelle (Tmin ; Tmax), et de définition d'un état interne (E10_min) du système (10) pour la borne inférieure (Tmin) ; suivie par une opération de stockage (132) de l'état interne (E10_min) du système (10) défini pour la borne inférieure (Tmin) et une opération de suppression (134) des données (Dij) de l'au moins une mémoire tampon (Bi) antérieures à la fenêtre temporelle (Tmin ; Tmax) ; et
- une étape de traitement (140), par l'algorithme de fusion, des données (Dij) de l'au moins une mémoire tampon (Bi) comprises dans la fenêtre temporelle (Tmin ; Tmax) de la période d'exécution (100).

2. Procédé selon la revendication 1, **caractérisé en ce qu'**il comprend au moins une deuxième période d'exécution (200) de l'algorithme de fusion à un instant (T200) faisant suite à la première période d'exécution (100) et incluant les étapes suivantes :
- une étape de détermination (210) du marqueur temporel le plus récent (Tj_new_i) des données mémorisées dans l'au moins une mémoire tampon (Bi), de manière à constituer un ensemble de marqueurs temporels les plus récents (Tj_new) de la deuxième période d'exécution (200);
- une étape de définition (220) d'une deuxième fenêtre temporelle (Tmin ; Tmax), incluant une borne inférieure (Tmin) définie par le marqueur temporel le plus ancien (Tj_oldest) parmi l'ensemble des marqueurs temporels les plus récents (Tj_new) et une borne supérieure (Tmax) définie par le marqueur temporel le plus récent (Tj_newest) parmi l'ensemble des marqueurs temporels les plus récents (Tj_new) de la deuxième période d'exécution (200) ;
- une étape de traitement (230), par l'algorithme de fusion, des données (Dij) de l'au moins une mémoire tampon (Bi) antérieures à la deuxième fenêtre temporelle (Tmin ; Tmax) en repartant de l'état interne (E10_min) du système (10) défini pour la borne inférieure (Tmin) de la première période d'exécution (100), et de définition d'un état interne (E10_min) du système (10) pour la borne inférieure (Tmin) de la deuxième période d'exécution (200); suivie par une opération de stockage (232) de l'état interne (E10_min) du système (10) défini pour la borne inférieure (Tmin) de la deuxième période d'exécution (200) et une opération de suppression (234) des données (Dij) de l'au moins une mémoire tampon (Bi) antérieures à la deuxième fenêtre temporelle (Tmin ; Tmax) ; et
- une étape de traitement (240), par l'algorithme de fusion, des données (Dij) de l'au moins une mémoire tampon (Bi) comprises dans la deuxième fenêtre temporelle (Tmin ; Tmax).

3. Procédé selon la revendication 2, **caractérisé en ce que** la deuxième période d'exécution (200) inclut une étape supplémentaire (250) d'association entre les données (Dij) de fusion calculées à l'étape de traitement (140) de la fenêtre temporelle (Tmin ; Tmax) de la première période d'exécution (100) et les données (Dij) de fusion calculées lors des étapes de traitement (230, 240) de la deuxième période d'exécution.

4. Procédé selon l'une quelconque des revendications 1 à 3, **caractérisé en ce que** l'algorithme de fusion est configuré pour déterminer si un ou plusieurs capteurs (Ci) fournissent plus fréquemment et/ou plus rapidement des données que d'autres capteurs (Ci), de sorte qu'une différence de débit de données (Dij) soit traitée avec des fonctions de pondération ou du sous-échantillonnage.

5. Procédé selon l'une quelconque des revendications 1 à 4, **caractérisé en ce que** l'algorithme de fusion utilise un filtre de Kalman ou l'une de ses variantes.

6. Procédé selon la revendication 5, **caractérisé en ce que** l'état interne (E10_min) mémorisé comprend la moyenne et la covariance de l'ensemble des attributs des objets d'une scène.

7. Procédé selon l'une quelconque des revendications 1 à 6, **caractérisé en ce que** dans l'étape de traitement (140 ; 240), par l'algorithme de fusion, des données (Dij) de l'au moins une mémoire tampon (Bi) comprises dans la fenêtre temporelle (Tmin ; Tmax), l'algorithme de fusion considère toutes les données (Dij) comprises dans la fenêtre temporelle (Tmin ; Tmax).

8. Procédé selon l'une quelconque des revendications 1 à 6, **caractérisé en ce que** dans l'étape de traitement (140 ; 240), par l'algorithme de fusion, des données (Dij) de l'au moins une mémoire tampon (Bi) comprises dans la fenêtre temporelle (Tmin ; Tmax), l'algorithme de fusion considère seulement une partie des données (Dij) comprises dans la fenêtre temporelle (Tmin ; Tmax).

9. Procédé selon l'une quelconque des revendications 1 à 8, **caractérisé en ce que** plusieurs capteurs (Ci) ont un même format de mesure, une seule et même mémoire tampon (Bi) étant utilisée pour tous ces capteurs (Ci) ayant le même format de mesure.

10. Procédé selon l'une quelconque des revendications 1 à 9, **caractérisé en ce que** lorsqu'un ou plusieurs capteurs (Ci) respectent un temps d'exclusion (Tex) entre deux mesures consécutives, alors dans l'étape de détermination (110 ; 210), ce temps d'exclusion (Tex) est ajouté au marqueur temporel le plus récent (Tj_new_i) dans la mémoire tampon (Bi) lors de la détermination de l'ensemble de marqueurs temporels les plus récents (Tj_new) utilisés pour établir la borne inférieure (Tmin) dans l'étape de définition (120 ; 220) de la fenêtre temporelle (Tmin ; Tmax)

11. Dispositif (20) de gestion de données multi-capteurs, **caractérisé en ce que** le dispositif (20) est configuré pour exécuter le procédé (1) selon l'une des revendications 1 à 10, le dispositif (20) comprenant :
- une pluralité de capteurs (Ci) configurés pour effectuer des mesures de données (Dij) ;
- une horloge globale (30) partagée entre tous les capteurs (Ci), chaque capteur (Ci) étant capable de tamponner une donnée (Dij) avec un marqueur temporel (Tj) sur l'horloge globale (30) ; et
- un calculateur (40) configuré pour exécuter l'algorithme de fusion de données sur un support informatique.
